# EUROPEAN PATENT APPLICATION

(11) **EP 4 474 853 A1**
(43) Date of publication of application: **11.12.2024**
(21) Application number: 23177147.8
(22) Date of filing: 05.06.2023
(51) Int. Cl.: G01S 7/40, G01S 7/00, G01S 13/86, G01S 13/931

(54) **RADAR BLINDNESS AND BLOCKAGE DETECTOR, RADAR DETECTOR SYSTEM, DRIVER ASSISTANCE SYSTEM AND METHOD FOR DETECTING RADAR BLINDNESS AND BLOCKAGE**

(71) Applicant: Robert Bosch GmbH, 70442 Stuttgart (DE)
(72) Inventor: Isoyama, Eiji, Kanagawa (JP); Luyken, Lewis, Cockatoo VIC (AU)

(57) **Abstract**

Detection of a blind or blocked radar sensor. For this purpose, it is proposed to refer to sensor data from one or more further sensors and/or to data from external data sources. Based on this additional data, a probability or likelihood for a blind or blocked radar sensor is calculated and the final decision for a blind or blocked radar sensor is performed by evaluating the blockage detection of the radar sensor itself in combination with the calculated probability for a blind or blocked radar sensor. In this way, false detections of blind or blocked radar sensors can be reduced and the reliability of a blindness or blockage detection of a radar sensor can be improved.

## Description

### Technical field

The present invention relates to a radar blindness and blockage detector and a method for detecting radar blindness and blockage. The present invention further relates to a radar detector system and a driver assistance system with such a radar detector system.

### Background

Modem vehicles may use advanced driver-assistance systems (ADAS) for partial or fully automated driving. For this purpose, sensor signals from multiple sensors are used in order to scan the environment of the vehicle and to identify objects or obstacles in the surrounding. For example, radar sensors may be used for detecting obstacles in a driving path of the vehicle.

In order to evaluate the reliability of the output of a radar sensor, it is desirable to identify a malfunction such as blindness or blockage of the radar sensor. For example, blockages may be detected by monitoring properties of a radar signal.

German patent application DE 10 2021 202 299 A2 describes an approach for detecting sensor blindness of a radar sensor, wherein a radar spectrum is determined based on received radar signals and a part of the radar spectrum is provided as an input variable to a trained machine learning module.

### Summary of the invention

The present invention provides a radar blindness and blockage detector, a method for detecting radar blindness and blockage, a radar detector system and a driver assistance system with the features of the independent claims.

Further advantageous embodiments are subject matter of the dependent claims.

According to a first aspect, a radar blindness and blockage detector is provided. The radar blindness and blockage detector comprises a radar sensor and a processing device. The radar sensor is configured to monitor properties of a radar signal. The radar sensor is further configured to provide radar sensor blockage information based on the monitored properties of the radar signal. The processing device is configured to receive sensor data from at least one further sensor. Additionally or alternatively, the processing device may receive data from an external data source. The processing device is further configured to calculate a probability indicator of a sensor blockage of the radar sensor. The probability indicator is calculated based on the received sensor data from the at least one further sensor and/or the data received from the external data source. The processing device is further configured to determine a blindness and blockage of the radar sensor. The blindness and blockage is determined by processing the sensor blockage information from the radar sensor in connection with the calculated probability indicator of the sensor blockage.

According to a further aspect, a radar detector system is provided. The radar detector system comprises a radar blindness and blockage detector according to the first aspect. In this radar detector system, the radar sensor is further configured to emit radar signals and receive radar echoes based on the emitted radar signals. The radar sensor may further identify object based on the received radar echoes. Especially, the radar sensor may determine a distance, a spatial position and/or a velocity of one or more objects in a field of view of the radar sensor.

According to still a further aspect, a driver assistance system is provided. The driver assistance system may comprise a radar detector system according to the second aspect. In particular, the driver assistance system is configured to process radar data from the radar detector. Especially, the driver assistance system may process the radar data depending on the determined blindness and blockage of the radar sensor. For example, the driver assistance system may consider the output of the radar detector only if no blindness or blockage is detected.

According to still a further aspect, a method for detecting radar blindness and blockage is provided. The method comprises the steps of monitoring properties of a returned radar signal by a radar sensor and providing radar sensor blockage information based on the monitored properties of the radar signal. The method further comprises receiving sensor data from at least one further sensor. Additionally or alternatively, data from an external data source may be received. Further, the method comprises calculating a probability indicator of a sensor blockage of the radar sensor. The probability indicator is calculated based on the received data from at least one further sensor and/or the data from the external data source. Further, the method comprises determining a blindness and blockage of the radar sensor. The blindness and blockage is determined by processing the sensor blockage information from the radar sensor in conjunction with the calculated probability indicator of the sensor blockage.

### Advantages of the invention

When using sensor data, in particular object detection by a radar sensor, it is important to assess the reliability of the provided sensor data. If a radar sensor is blocked, obstacles in the environment of the vehicle cannot be identified correctly. For this purpose, conventional radar sensors may perform a monitoring of the radar sensor by evaluating properties of the returned radar signals. The monitored properties of the radar signal may be, for example, absorption or distortion of the radar signal. For this purpose, the returned radar signal may be evaluated with respect to the amended radar signal. However, such a monitoring may lead to false detection of blockage depending on the environmental conditions. For example, when driving through a scenario with no surrounding object for a long period of time, a blockage may be detected even if the radar sensor works properly due to a lack of returning radar signals.

The present invention therefore aims to use additional information in order to improve the reliability of a blindness or blockage detection of the radar sensor. Especially, the present invention does not only perform a simple combination of a blindness and blockage detection by the radar sensor or a simple output signal of a further sensor, but moreover, the present invention introduces a likelihood or probability information for improving the reliability of a detected blindness or blockage of the radar sensor. In other words, data from one or more additional sensors or data from further external data sources may be used in order to calculate a likelihood for blindness or blockage of the radar sensor. This likelihood is used in order to evaluate the blindness or blockage information provided by the radar sensor.

Consequently, in case that a relative high probability or likelihood for blindness or blockage is determined based on the data from the further sensors or external data sources, the blindness and blockage information from the radar sensor is rated relatively high. On the other hand, if the probability or likelihood for blindness or blockage based on the data from the further sensors or the external data source is low, the blindness and blockage information from the radar sensor or rated relatively low. In this way, false alarms for blindness or blockage of a radar sensor due to specific environmental conditions can be reduced and the reliability of the blindness and blockage detection can be improved.

According to an embodiment, the processing device is configured to adapt one or more parameters for determining a blindness and blockage of the radar sensor. In particular, the parameters may relate to filter parameters and/or threshold parameters for determining a blindness or blockage. The parameters may be adapted based on the calculated probability indicator of the sensor blockage. In this way, the decision whether or not the radar sensor is blocked can be easily adapted according to the determined probability or likelihood for blindness or blockage of the radar sensor. In other words, in case that a high probability for blindness or blockage of the radar sensor is determined, the degree for determining a blindness and blockage of the radar sensor based on the information provided by the radar sensor itself is set relatively high, wherein the conditions for determining blindness and blockage of the radar sensor based on the information provided by the radar sensor is set low if a low probability or likelihood for blindness and blockage is calculated.

According to an embodiment, the processing device is configured to receive sensor data from an optical sensor, an ultrasonic sensor, a temperature sensor and/or a humidity or rain sensor. The optical sensor may be, for example, a camera or camera system. The ultrasonic sensors may relate, for example, to sensors from measuring a distance to objects as used, for example, for a park distance assistance system. Furthermore, weather conditions may be determined, for example, based on temperature, humidity or detected rain. Based on the sensor data provided by the respective sensors, weather conditions may be determined. Additionally or alternatively, further conditions of the environment such as road conditions or a surface surrounding the vehicle may be determined in order to assess the reliability of the blindness and blockage of the radar sensor. However, it is understood, that any further appropriate sensor may be also used for evaluating the reliability of blindness and blockage of a radar sensor.

According to an embodiment, the processing device is configured to receive external data from a cloud service. However, external data from any other data source may be also received. The external data may relate, for example, to weather data, map data, in particular road map data or any other appropriate kind of data for assessing a reliability for radar sensor blockage.

According to an embodiment, the processing device is configured to detect weather conditions, in particular weather conditions in an environment of the radar sensor. Accordingly, the processing device may calculate the probability indicator based on the detected weather condition. For example, the probability for blindness or blockage of a radar sensor may increase in case of rainy weather or snow. On the other hand, the probability for blindness or blockage of the radar sensor will decrease in good weather conditions such as sunshine or the like.

According to an embodiment, the processing device is configured to detect a driving surface in the environment of the radar sensor. Accordingly, the processing device may calculate the probability indicator based on the detected driving surface. For example, driving through mud or slush may result in a dirty sensor and consequently a high probability for blindness or blockage of the radar sensor. On the other hand side, driving through an area without any further objects, for example through a desert or the like, may lead to conditions wherein the radar sensor will not receive radar echoes for a long period of time even if no blindness or blockage occurs. In such a scenario, the likelihood for blindness or blockage may be set low, so that blindness or blockage information of the radar sensor based on the evaluation of absorption or distortion will not result to false alarms for blindness or blockage.

According to a further embodiment, the processing device is configured to dynamically increase and/or decrease the probability indicator of a sensor blockage. The probability may be increased or decreased based on the received sensor data from the at least one further sensor and/or the data from the external data source. For example, the probability or likelihood for blindness or blockage of the radar sensor may increase or decrease over time based on the data provided from the further sensors or the external data source. In this way, sudden changes or effects over a short period of time can be easily ignored.

According to a further embodiment, the processing device is configured to dynamically increase and/or decrease the thresholds or timers used to detect sensor blockage. The thresholds or timers may be increased or decreased based on the received sensor data from the at least one further sensor and/or the data from the external data source. For example, the threshold or timer for blindness or blockage detection of the radar sensor may increase or decrease over time based on the data provided from the further sensors or the external data source. In this way, sudden changes or effects over a short period of time can be easily ignored.

### Brief description of the drawings

In the following, possible embodiments of different aspects of the present invention are described in more detail with reference to the enclosed figures.
- Fig. 1:: a schematic diagram illustrating a vehicle with a driver assistance system including a radar detector system with a radar blindness and blockage detector according to an embodiment;
- Fig. 2:: a radar blindness and blockage detector according to an embodiment; and
- Fig. 3:: a flow diagram illustrating a method for radar blindness and blockage detection according to an embodiment.

### Description of embodiments

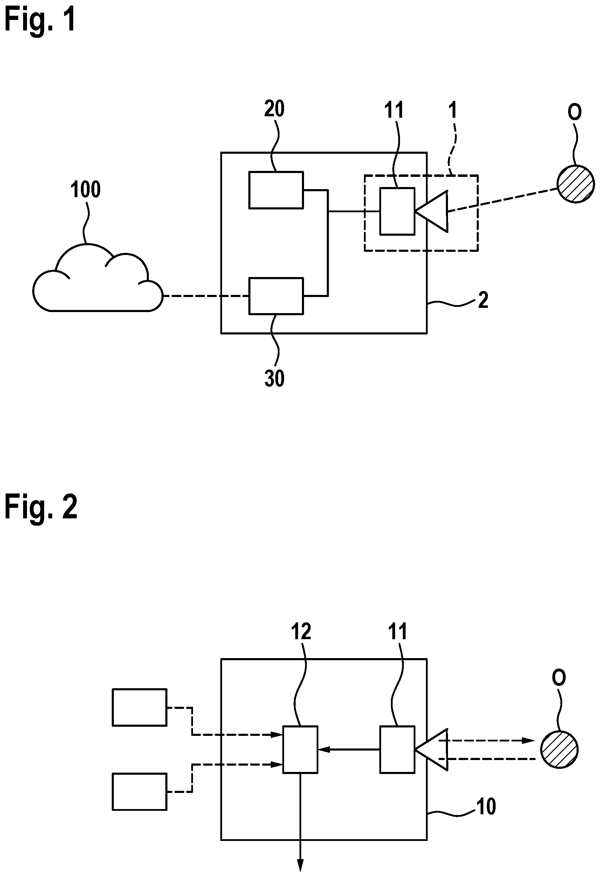

Figure 1 shows a schematic block diagram illustrating a vehicle with a driver assistance system 2 such as an advanced driver assistance system (ADAS) according to an embodiment. The driver assistance system may be used for partially or fully autonomous driving the vehicle or at least for assisting the driver when driving the vehicle.

The driver assistance system 2 may comprise a radar detector system 1 for detecting objects O in an environment of the vehicle. The radar detector system 1 may generate and emit radar signals and receive radar echoes of the emitted radar signals. Based on the received radar echoes, the radar detector system 1 may detect one or more objects O. In particular, the radar detector system 1 may provide, for example, information relating to a position, distance and/or velocity of one or more detected objects O.

Further to this, the driver assistance system 2 of the vehicle may comprise one or more further sensors 20. The further sensors 20 may be, for example, optical sensors such as a camera, a LiDAR sensor or the like. Further, the further sensors 20 may comprise ultrasonic sensors. Such ultrasonic sensors may emit ultrasonic signals and receive echoes of the emitted ultrasonic waves in order to detect an obstacle in a field of view of the sensor 20 and to determine a distance between the sensor 20 and the obstacle. Additionally or alternatively, the further sensors 20 may comprise any other kind of appropriate sensor such as temperature sensor, humidity sensor, rain sensor, etc. The further sensors 20 may also comprise, for example, a global navigation satellite system (GNSS) such as GPS, Galileo or the like in order to determine a spatial position of the vehicle. Based on such a determined position, the system may refer to map data in order to obtain further information such as roads or specifications about a driving surface in the environment of the vehicle.

Additionally or alternatively, the driver assistance system 1 may comprise a communication interface 30. The communication interface 30 may establish a communication link to an external data source 100. The external data source 100, may be, for example, a server in a cloud or the like. In this way, the external data source 100 may provide additional information such as traffic information, further information about useable road or the driving surface in the environment of the vehicle. Additionally or alternatively, the external data source 100 may provide, for example, information relating to weather conditions or any other appropriate data which may be used by the driver assistance system.

As already mentioned above, the radar detector system 1 may perform object detection by emitting radar signals and receiving radar echoes. Accordingly, objects in the field of view of the radar detector system 1 are identified by evaluating the radar echoes. However, if the emission of the radar signals and/or the reception of the radar echoes is disturbed, no proper detection of objects can be performed. For example, the emission or reception of the radar signals or the radar echoes may be disturbed or blocked due to contamination such as dirt on the antenna. Such conditions may occur, for example, when driving through an area of mud or slush. Further, it may be possible that snow or ice may be located on the surface of the radar antennas. However, there may be also other reasons which may have impact on the emission or reception of the radar signals.

If no proper object detection can be performed, the radar detector system 1 may be considered as blind or blocked.

Conventional radar detection systems may perform a detection of a blind or blocked system by monitoring properties of the returned radar signal. However, there may be some conditions when no radar signals can be received even though the radar detector system 1 is operating properly. For example, if the vehicle is driving in an area without any further objects, such as a desert or the like, the radar detector system 1 will not receive radar echoes. In such cases, the radar detector system 1 may consider a condition of a blind or blocked radar detector even though the system is operating properly. Thus, a driver assistance system 1 will receive a notification of a blocked radar detector system even though the system is operating properly.

In order to improve the reliability of a blindness or blockage detection of a radar detector system 1, the present invention performs an enhanced blindness and blockage detection by further taking into account additional information. In particular, an approach is provided which determines a likelihood or probability of blindness of a radar sensor, and wherein the blindness detection information of the radar sensor is further processed and evaluated based on this likelihood or probability.

Figure 2 shows a radar detector system 1 with a blindness and blockage detector 10 according to an embodiment. A radar sensor 11 may perform a monitoring of a returned radar signal. Based on this monitoring, the radar sensor 11 may provide sensor blockage information. This sensor blockage information may specify whether or not the radar detector system 1 may be blocked. For example, the sensor blockage information may specify that the radar detector system 1 is blocked if no radar echoes are received within a predetermined period of time. However, any other appropriate approach for evaluating the radar detector system 1 in order to identify a blockage of the radar detector system 1 may be possible, too.

The radar blindness and blockage detector 10 may further comprise a processing device 12. This processing device 12 may receive the sensor blockage information from the radar sensor 11. Further, the processing device 12 may also receive sensor data from at least one further sensor 20. Additionally or alternatively, the processing device can also receive data from an external data source. For example, the processing device 12 may receive data from an external data source 100 via the communication interface 30.

The processing device 12 may calculate a probability specifying a likelihood for blockage of the radar sensor 11. For this purpose, the processing device may consider the sensor data from the at least one further sensor 20. Additionally or alternatively, the processing device may consider the data from the external data source 100.

For example, the processing device 12 may analyse optical data such as camera images in order to evaluate the environment of the vehicle. Especially, processing device 12 may evaluate a driving surface of the vehicle. If the environmental information such as the driving surface leads to the conclusion that the driving surface may be almost flat without any objects or at least only a very small number of radar relevant objects, this information may lead to the conclusion that the radar detector system 1 might not receive significant radar echoes. However, since the additional information such as the information relating to the driving surface might be used to conclude that the radar sensor might be not blocked or blind, the processing device 12 may determine a very low probability of a blind or blocked radar detector system 1.

Otherwise, if the additional data from the further sensors 20 could be used to identify a very dirty environment with plenty of mud or slush, this could lead to plenty of dirt in front of the radar antennas. Accordingly, a probability for blind or blocked radar detector system 1 might be high.

Further to this, the probability of a blind or blocked radar sensor 11 may be also derived from weather conditions. For example, heavy rain or snow may also cause a blind or blocked radar sensor 11. Conversely, good and clear weather conditions such as dry and sunny weather usually may lead to a very low probability of blind or blocked radar sensor 11. Weather conditions may be also derived from optical data such as camera images or a temperature sensor or a rain sensor or the like.

Further to this, information relating to the driving surface in the environment of the vehicle, weather information or the like may be also received from external data sources 100. Such additional data from external data sources 100 may be also taken into account when determining a probability or likelihood of a blind or blocked radar sensor 11.

The likelihood or probability of a blind or blocked radar sensor 1 may be not only computed based on information relating to a single point in time. Moreover, the probability of a blind or blocked radar sensor 11 may be dynamically adapted. For example, a previously determined probability or likelihood may be increased or decreased based on newly received data from a further sensor 20 and/or additional data from an external data source 100. In this way, a single event in the obtained data may not immediately lead to a rapid change in the determined probability or likelihood for a blind or blocked radar sensor 1.

After determining the probability or likelihood for a blind or blocked radar sensor 11, processing device 12 may consider the blockage information from radar sensor 11 in combination with the determined probability of a blind or blocked radar sensor 11. For this purpose, threshold values for deciding whether or not the information provided by the radar sensor 11 will lead to the decision of a blind or blocked radar sensor 11 may be adapted according to the determined likelihood for a blind or blocked radar sensor 11. Alternatively, a weighting factor for assessing the blockage information from radar sensor 1 may be adapted according to the calculated probability for a blind or blocked radar sensor 11 However, any other appropriate scheme for adapting the evaluation of the blockage information from radar sensor 10, for example a modification of filter parameters, thresholds, timers, or the like may be possible, too.

Based on the evaluation of the blockage information from the radar sensor 11 in combination with the probability for blindness or blockage which has been calculated based on additional information from further sensors 20 and/or additional data sources 100, the processing device 12 may perform a decision whether or not the radar sensor 11 may be considered as blind and blocked. This decision may be used by the driver assistance system 2. For example, the driver assistance system 2 may only take into account information from the radar detector system 1 if the radar detector system 1 is not considered to be blind and blocked. Otherwise, this information from the radar detector system 1 may be skipped. However, any other appropriate approach for considering the information from the radar detector system 1 depending on the detection of a blind and blocked radar sensor 11 may be also possible.

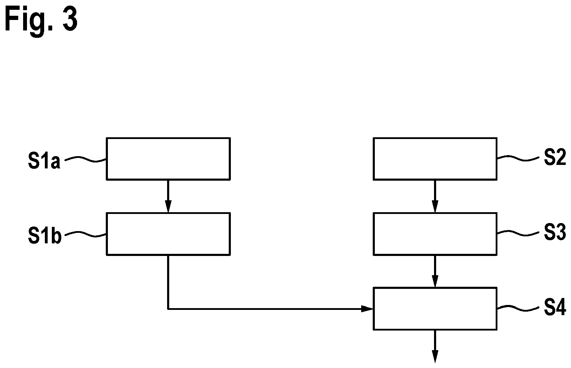

Figure 3 shows a schematic flow diagram of a method for blindness and blockage detection of a radar sensor 11 according to an embodiment.

The radar sensor 11 may perform a monitoring of the properties of returned radar signals in a step S1a and provide blockage information of the radar sensor 11 based on the result of the monitoring in step S1b.

Further, in a step S2 sensor data from one or more further sensors 20 may be received. Additionally or alternatively, further data from an external data source 100 may be received.

In step S3, a probability or likelihood for a blocked or blind radar sensor 11 may be computed based on the data from the one or more further sensors 20 and/or the external data sources 100.

Finally, in step S4 a blindness and blockage of the radar sensor 11 is determined by considering the blockage information from the radar sensor 11 depending on the determined probability or likelihood for a blind and blocked data sensor 11.

Summarizing, the present invention relates to a detection of a blind or blocked radar sensor. For this purpose, it is proposed to refer to sensor data from one or more further sensors and/or to data from external data sources. Based on this additional data, a probability or likelihood for a blind or blocked radar sensor is calculated and the final decision for a blind or blocked radar sensor is performed by evaluating the blockage detection of the radar sensor itself in combination with the calculated probability for a blind or blocked radar sensor. In this way, false detections of blind or blocked radar sensors can be reduced and the reliability of a blindness or blockage detection of a radar sensor can be improved.

## Claims

1. Radar blindness and blockage detector (10), comprising:
a radar sensor (11) configured to provide sensor blockage information by monitoring properties of a radar signal;
a processing device (12) configured to receive sensor data from at least one further sensor (20) and/or to receive data from an external data source (100), to calculate a probability indicator of a sensor blockage of the radar sensor (11) based on the received sensor data from the at least one further sensor (20) and/or the data from the external data source (100), and to determine a blindness and blockage of the radar sensor (11) by processing the sensor blockage information from the radar sensor (11) using the calculated probability indicator of the sensor blockage.

2. Radar blindness and blockage detector (10) according to claim 1, wherein the processing device (12) is configured to adapt one or more filter or threshold parameters for determining a blindness and blockage of the radar sensor (11) based on the calculated probability indicator of the sensor blockage.

3. Radar blindness and blockage detector (10) according to claim 1 or 2, wherein the processing device (12) is configured to receive sensor data from an optical sensor, an ultrasonic sensor, a temperature sensor and/or a humidity or rain sensor.

4. Radar blindness and blockage detector (10) according to any of claims 1 to 3, wherein the processing device (12) is configured to receive data from data from an external cloud service.

5. Radar blindness and blockage detector (10) according to any of claims 1 to 4, wherein the processing device (12) is configured to detect weather conditions in an environment of the radar blindness and blockage detector (10), and to calculate the probability indicator based on the detected weather condition.

6. Radar blindness and blockage detector (10) according to any of claims 1 to 5, wherein the processing device (12) is configured to detect a driving surface in the environment of the radar blindness and blockage detector (10), and to calculate the probability indicator based on the detected driving surface.

7. Radar blindness and blockage detector (10) according to any of claims 1 to 6, wherein the processing device (12) is configured to dynamically increase and/or decrease the probability indicator of a sensor blockage based on the received sensor data from at least one further sensor (20) and/or the data from the external data source (100).

8. Radar blindness and blockage detector (10) according to any of claims 1 to 7, wherein the processing device (2) is configured to dynamically increase and/or decrease thresholds or timers used to detect sensor blockage.

9. Radar detector system (1) comprising a radar blindness and blockage detector (10) according to any of claims 1 to 8.

10. Driver assistance system (2) comprising a radar detector system (1) according to claim 9,
wherein the driver assistance system (2) is configured to process radar data from the radar detector system (1) depending on the determined blindness and blockage of the radar sensor (11).

11. Method for detecting radar blindness and blockage, comprising:
monitoring (S1a) properties of a radar signal by a radar sensor and providing (S1b) sensor blockage information based on the properties of the radar signal;
receiving (S2) sensor data from at least one further sensor (20) and/or receiving data from an external data source (100);
calculating (S3) a probability indicator of a sensor blockage of the radar sensor (11) based on the received sensor data from at least one further sensor (20) and/or the data from the external data source (100); and
determining (S4) a blindness and blockage of the radar sensor (11) by processing the sensor blockage information from the radar sensor (11) using the calculated probability indicator of the sensor blockage.
